# EUROPEAN PATENT APPLICATION

(11) **EP 4 807 443 A1**
(43) Date of publication of application: **16.09.2026**
(21) Application number: 24888869.5
(22) Date of filing: 17.06.2024
(51) Int. Cl.: G03B 17/55, G03B 17/12, G03B 30/00, H04N 23/55, H04N 23/51

(54) **CAMERA MODULE**

(30) Priority: 10.11.2023 KR 20230155858; 10.11.2023 KR 20230155859
(71) Applicant: LG Innotek Co., Ltd., Seoul 07796 (KR)
(72) Inventor: KIM, Do Hyeon, Seoul 07796 (KR)
(74) Representative: Plasseraud IP
(86) International application number: PCT/KR2024/008356
(87) International publication number: WO 2025/100668

(57) **Abstract**

This camera module comprises: a first body; a lens module which is disposed in the first body and includes a barrel and a lens disposed in the barrel; a substrate module which is disposed in the first body; and a heating member which has one end connected to a surface of the lens and the other end connected to the substrate module and provides heat to the lens, wherein the barrel has therein a heat-insulating area which is a closed space.

## Description

### [Technical Field]

The present embodiment relates to a camera module.

### [Background Art]

Recently, ultra-small camera modules have been developed and are widely used in small electronic products such as smartphones, laptops, and game consoles.

As automobiles become more popular, ultra-small cameras are widely used in vehicles as well as in small electronic products. For example, black box cameras for vehicle protection or objective data on traffic accidents, rear surveillance cameras that allow drivers to monitor the blind spots at the rear of the vehicle through a screen to ensure safety when reversing, and surrounding detection cameras that can monitor the surroundings of the vehicle are provided.

A camera may be equipped with a lens, a lens holder that accommodates the lens, an image sensor that converts an image of a subject collected in the lens into an electrical signal, and a printed circuit board on which the image sensor is mounted. A housing forming the outer appearance of the camera is formed with a structure in which the entire area is sealed to prevent internal components from being contaminated by foreign substances containing moisture.

In a case of a camera module, since it is disposed outside a vehicle and is greatly affected by outdoor air, frost, dew condensation, and freezing frequently occur on a lens in winter. When frost, dew condensation, and freezing occur on the lens, there is a problem that performance of the camera module is significantly deteriorated.

### [Detailed Description of the Invention]

### [Technical Subject]

An object of the present invention is to provide a camera module that can quickly remove frost, ice, or the like generated on a surface of a lens through a heating function and can improve heat generation efficiency.

In addition, another object of the present invention is to provide a camera module that can concentrate heat on the lens by preventing heat from being lost to the outside.

### [Technical Solution]

A camera module of the present embodiment comprises: a first body; a lens module which is disposed in the first body and includes a barrel and a lens disposed within the barrel; a substrate module which is disposed in the first body; and a heating member which has one end connected to a surface of the lens and the other end connected to the substrate module and provides heat to the lens, wherein the barrel has therein a heat-insulating area which is a closed space.

The heat-insulating area may be a vacuum.

A heat-insulating material is disposed within the heat-insulating area, and a thermal conductivity of the heat-insulating material may be smaller than a thermal conductivity of a material forming the barrel.

The lens includes an outermost lens coupled to one end of the heating member and a rear lens disposed at a rear of the outermost lens, the barrel includes a first body part within which the rear lens is disposed and a second body part within which the outermost lens is disposed, and a thickness of the first body part may be greater than a thickness of the second body part.

The heat-insulating area may be formed within the first body part.

The heat-insulating area may be formed within the second body part.

The heating member includes an upper end portion coupled to the lens, a lower end portion coupled to the substrate module, and a connection part connecting the upper end portion and the lower end portion, and a penetrating hole or a penetrating groove through which the connection part penetrates may be formed within the second body part.

The barrel includes an inner plate part disposed within an inner side of the heat-insulating area adjacent to the rear lens, and an outer plate part disposed within an outer side of the heat-insulating area adjacent to the first body, and a thickness of the outer plate part may be greater than a thickness of the inner plate part.

A thickness of the second body part may be greater than the thickness of the inner plate part or the thickness of the outer plate part.

A sum of the thicknesses of the outer plate part and the inner plate part may be equal to or smaller than a thickness of the heat-insulating area.

### [Advantageous Effects]

There is an advantage that frost or freezing occurring on the surface of the lens can be rapidly removed through heat generated from the heating member.

In particular, there is an advantage that heat can be easily transferred toward the lens through thickness control of a first substrate and a second substrate, and heat generation efficiency of the lens can be improved by preventing heat from being lost to other areas.

In addition, by forming a heat-insulating area within the barrel, a heat transfer path within the barrel is reduced and thus thermal resistance is increased, which is advantageous in that heat for heating the lens can be prevented from being lost to the outside.

In addition, by forming an air gap having relatively low thermal conductivity between the lens and the barrel, there is an advantage that heat loss from a heat generating area to the outside can be minimized.

In particular, there is an advantage that thermal contact resistance through the barrel can be increased by a difference in surface roughness between a side surface of the lens and an inner surface of the barrel.

### [Brief Description of Drawings]

FIG. 1 is a perspective view of a vehicle according to an embodiment of the present invention.
FIG. 2 is a cross-sectional view of a camera module according to a first embodiment of the present invention.
FIG. 3 is a plan view showing a region of a heating member according to a first embodiment of the present invention.
FIG. 4 is a view showing A-A' of FIG. 3.
FIG. 5 is an enlarged view of A of FIG. 1.
FIG. 6 is a cross-sectional view illustrating a coupling structure between a lens and a barrel according to a second embodiment of the present invention.
FIG. 7 is a view illustrating a modified embodiment of the coupling structure between the lens and the barrel according to the second embodiment of the present invention.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due to another component between that two components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

The 'optical axis direction' used hereinafter is defined as the optical axis direction of the lens. Meanwhile, the 'optical axis direction' may correspond to 'up-down direction', 'z-axis direction', and the like.

Hereinafter, the present invention will be described in more detail with reference to the attached drawings.

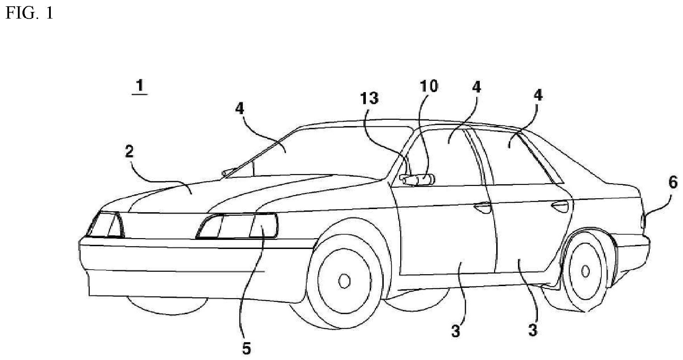

FIG. 1 is a perspective view of a vehicle according to an embodiment of the present invention.

Referring to FIG. 1, a vehicle **1** according to an embodiment of the present invention may include a body **2**, a door **3**, a glass **4**, a head lamp **5**, a tail lamp **6**, and a camera module **10**.

The body **2** may be an exterior member of the vehicle **1**. The body **2** may have various forms such as a frame type, a monocoque type, and the like. One or more doors **3** may be coupled to a side surface of the body **2**. In addition, the glass **4** may be coupled to front and rear portions of an upper portion of the body **2** (portions where pillars are formed) and the door **3**. The head lamp **5** may be mounted at a front of a lower portion of the body **2**. The tail lamp **6** may be mounted at a rear of the lower portion of the body **2**.

The camera module **10** may be installed on a side portion of the body **2** or a door disposed at a front among the one or more doors **3**. The camera module **10** may be installed in front of the glass **4** coupled to the door **3**. That is, in the vehicle **1** of the present embodiment, a side mirror may be replaced with the camera module 10.

The camera module **10** may capture images of both rear sides of the vehicle. Images captured by the camera module **10** may be electrically connected to a display unit (not shown) through an electronic control unit (ECU) or the like. Accordingly, the images captured by the camera module **10** may be controlled by the electronic control unit (ECU) and reproduced on the display unit.

An interior space for a driver may be formed inside the body **2**. In addition, a display unit may be installed inside the body **2**. The display unit may output the images captured by the camera module **10**. The display unit may be installed on a dashboard (not shown) inside the body **2**.

The installation form of the camera module **10** in the vehicle **1** described above is exemplary, and the camera module **10** may be used for any one or more of a front camera, a side camera, a rear camera, and a black box of the vehicle **1**.

Hereinafter, a camera module according to a first embodiment will be described with reference to the drawings.

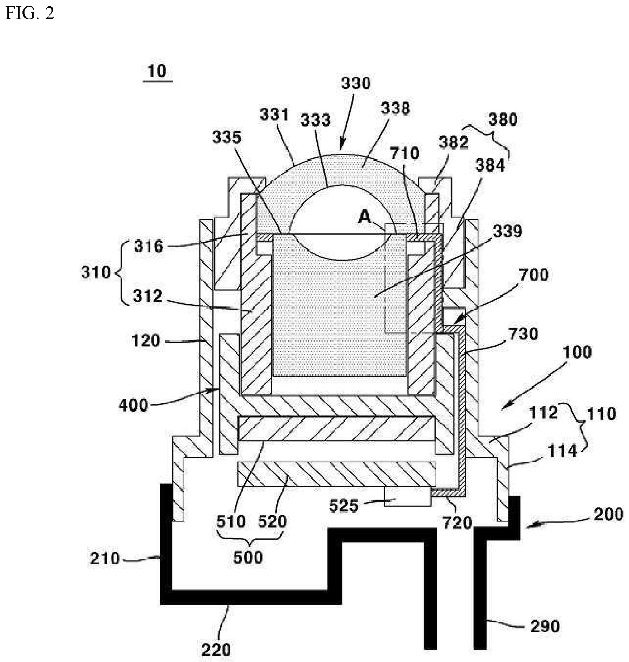

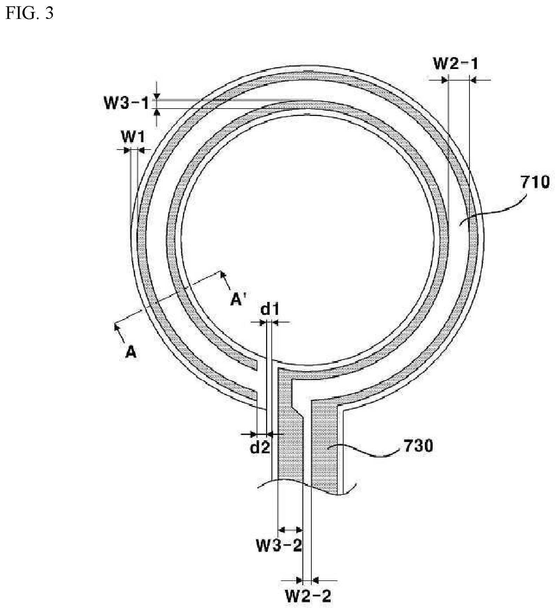

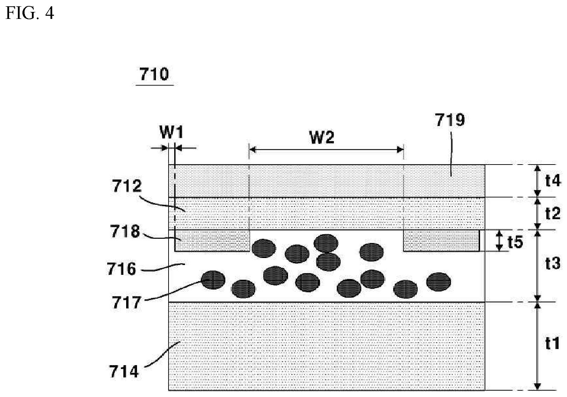

FIG. 2 is a cross-sectional view of a camera module according to a first embodiment of the present invention, FIG. 3 is a plan view showing a region of a heating member according to a first embodiment of the present invention, and FIG. 4 is a view showing A-A' of FIG. 3.

Referring to FIGS. 2 to 4, a camera module **10** according to the present embodiment may include a first body **100**, a second body **200**, a lens module **300**, a lens holder **400**, a substrate module **500**, and a heating member **700**.

The first body **100** may form an appearance of the camera module **10**. The first body **100** may be named any one of a front body, an upper housing, and a first housing. A space may be formed inside the first body **100** so that the lens module **300**, the lens holder **400**, and the substrate module **500** are disposed.

The first body **100** may include a body portion **110** and a protrusion **120**. The body portion **110** and the protrusion **120** may be integrally formed.

The body portion **110** may be formed of a metal material. The body portion **110** may be disposed on the second body **200**. The body portion **110** may be coupled to the second body **200**. A lower end of the body portion **110** may be fixed on the second body **200**. The body portion **110** may be coupled to the second body **200** by welding. Alternatively, the body portion **110** may be coupled to the second body **200** by an adhesive or fusion.

The body portion **110** may be formed in a square shape with an opened lower portion. At this time, corners of the body portion **110** may be formed to be rounded. The body portion **110** may include a top plate **112** and a first side plate **114** extending downward from an edge of the top plate **112**. The top plate **112** may be formed in a square shape. The top plate **112** may extend outward from a lower outer peripheral surface of the protrusion **120**. The first side plate **114** may extend downward from an outer edge of the top plate **112**. The first side plate **114** may be provided in plurality. The first side plate **114** may include four side plates. The first side plate **114** may be formed in a rectangular plate shape. As an example, the first side plate **114** may include a first-first side plate, a first-second side plate, a first-third side plate disposed on an opposite side of the first-first side plate, and a first-fourth side plate disposed on an opposite side of the first-second side plate. The first side plate **114** may include first-first to first-fourth corners respectively disposed between the first-first to first-fourth side plates. Each of the first-first to first-fourth corners may include a round shape in at least a portion thereof.

A space portion partitioned from other regions may be formed inside the body portion **110**. A lower portion of the space portion may be opened, and an upper portion of the space portion may be covered through lower surfaces of the protrusion **120** and the lens module **300**.

The first body **100** may include a protrusion 120. The protrusion **120** may be formed of a metal material. The protrusion **120** may have a circular cross-sectional shape. The protrusion **120** may be disposed on the body portion **110**. The protrusion **120** may extend upward from an upper surface of the body portion **110**. The protrusion **120** may be integrally formed with the body portion **110**. As a modified embodiment, the protrusion **120** may be coupled to the body portion **110**. In this case, the protrusion **120** may be fixed to the body portion **110** by an adhesive. The protrusion **120** may accommodate the lens module **300** therein. A space to which the lens module **300** is coupled may be formed at a center of the protrusion **120**. The lens module **300** may be disposed in the space within the protrusion **120**.

The camera module **10** may include a second body **200**. The second body **200** may be named any one of a rear body, a lower housing, a second housing, and a rear cover. The second body **200** may be formed in a square shape with an opened upper portion. The second body **200** may be formed of a metal material. The second body **200** may be disposed under the first body **100**. The second body **200** may be coupled to the first body **100**. The second body **200** may form an internal space through coupling with the first body **100**. The second body **200** may include a space portion having an opened upper surface.

The second body **200** may include a lower plate **220**. The lower plate **220** may face the top plate **112** of the first body **100** in an optical axis direction. The lower plate **220** may be spaced apart from the top plate **112** of the first body **110** in the optical axis direction. The lower plate **220** may be parallel to the top plate **112** of the first body 100. The lower plate **220** may be formed in a square shape. At this time, corners of the lower plate **220** may include a round shape in at least a portion thereof.

The second body **200** may include a second side plate **210**. The second side plate **210** may extend from the lower plate **220**. The second side plate **210** may extend upward from an outer edge of the lower plate **220**. A shield member (not shown) may be disposed on the second side plate **210**. The shield member may be in surface contact with an inner surface of the second side plate **210**. An upper end of the second side plate **210** may be coupled to the first body **100**. The inner surface of the second side plate **210** may be disposed to surround an outer surface of the first side plate **114**. The inner surface of the second side plate **210** and the outer surface of the first side plate **114** may be coupled to each other by at least one method among welding, an adhesive, and fusion.

The second body **200** may include a connector drawing-out portion **290**. The connector drawing-out portion **290** may have a shape protruding downward from a lower surface of the lower plate **220**. A connector (not shown) to be described later may be disposed inside the connector drawing-out portion **290**. An upper end of the connector may be coupled to a lower surface of the substrate module **500** and extend downward. The connector drawing-out portion **290** may be formed of a metal material. The connector drawing-out portion **290** may have a hollow pipe shape therein so that at least a portion of the connector is disposed.

The camera module **10** may include a lens module **300**. The lens module **300** may be coupled to the first body **100**. The lens module **300** may be coupled to a hole of the protrusion **120**. At least a portion of the lens module **300** may be disposed inside the protrusion **120**, and the remaining portion may be disposed to protrude upward from the first body **100**.

The lens module **300** may include a barrel **310** and one or more lenses **330** accommodated in the barrel **310**. The lens **330** may be disposed to face an image sensor in a substrate module **500** to be described later in an optical axis direction. The lens **330** may be optically aligned with the image sensor. The lens **330** may be provided in plurality and disposed to be spaced apart from each other along the optical axis direction within the barrel **310**. The lens **330** may include an outermost lens **340** and a rear lens **390** disposed at a rear of the outermost lens **340**. In FIG. 2, the rear lens **390** is illustrated as a single lens as an example, but is not limited thereto, and the rear lens **390** may also be provided in plurality and disposed along the optical axis direction within the barrel **310**. At least a portion of the outermost lens **340** may protrude upward from the camera module **10**.

The barrel **310** may include a space having opened upper and lower surfaces therein. The lens **330** may be disposed in the space of the barrel **310**. The barrel **310** may have a circular cross-sectional shape. The barrel **310** may be of a metal material.

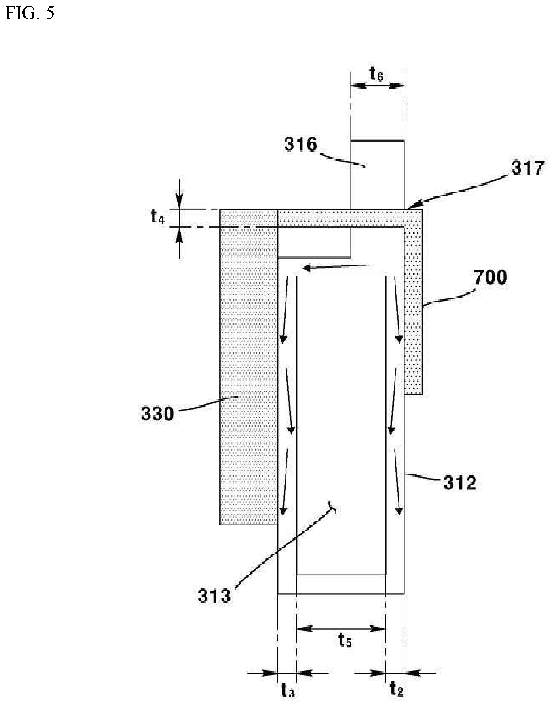

The barrel **310** may include a first body **312** and a second body **316**. The first body **312** and the second body **316** may be integrally formed. An outer surface of the first body **312** and an outer surface of the second body **316** may form a coplanar surface in the optical axis direction. The second body **316** may have a shape in which a portion of an upper surface of the first body **312** protrudes upward. As shown in FIG. 5, based on a direction perpendicular to an optical axis direction, a thickness **t3**+**t5**+**t2** of the first body part **312** may be greater than a thickness **t6** of the second body part **316**. Accordingly, a cross-sectional area of a displacement area of the lens **330** formed within the first body part **312** may be greater than a cross-sectional area of a displacement area of the lens **330** formed within the second body part **316**. The rear lens **339** may be disposed within a space within the first body part **312**, and the outermost lens **338** may be disposed within a space within the second body part **316**. At least a portion of the rear lens **339** may protrude upward and be disposed within the space within the second body part **316**.

As shown in FIGS. 1 and 5, based on a direction perpendicular to an optical axis direction, a penetrating hole or a penetrating groove through which a connection part **730** of a heating member **700** to be described later penetrates may be formed within the second body part **316** to penetrate from an inner surface to an outer surface of the second body part **316**.

The lens module **300** may include a retainer **380**. The retainer **380** may be coupled to an outer surface of the barrel **310**. The retainer **380** may be screw-coupled with the barrel **310**. Alternatively, the retainer **380** and the barrel **310** may be coupled to each other through epoxy. The retainer **380** may be coupled to an upper end of the barrel **310**. At least a portion of the retainer **380** may be disposed within the first body **100**. An incident surface of an outermost lens among the lens **330** may protrude upward from an upper surface of the retainer **380**.

The coupling structure of the barrel **310** and the retainer **380** described above is exemplary, and the camera module **10** may be implemented in an integrated structure in which the barrel **310** and the retainer **380** are one body.

The retainer **380** may have a ring-shaped cross-section. At least a portion of the retainer **380** may be disposed to cover an edge of the outermost lens. The retainer **380** may be disposed to surround the edge of the outermost lens. The retainer **380** may be disposed to cover an edge of an incident surface of the outermost lens. The retainer **380** may be in contact with a portion of the incident surface of the outermost lens.

The retainer **380** may include a first area **382** whose lower surface supports the incident surface of the outermost lens, and a second area **384** extending downward from an edge of the first area **382**. The second area **384** may be disposed between the barrel **310** and the first body **100**. The first area **382** and the second area **384** may be disposed perpendicular to each other.

The camera module **10** may include a lens holder **400**. The lens holder **400** may be disposed between the first body **100** and the barrel **310**. The lens holder **400** may be disposed to surround an outer surface of the barrel **310**. The lens holder **400** may be formed in a cylindrical shape having a hollow penetrating from an upper surface to a lower surface. A screw thread or a screw groove may be formed on an inner surface of the lens holder **400**. A screw groove or a screw thread may be formed on the outer surface of the barrel **310** facing the inner surface of the lens holder **400**. The barrel **310** may be screw-coupled within the lens holder **400**.

A substrate coupling part to which a first substrate **510** of a substrate module **500** to be described later is coupled may be formed on a lower surface of the lens holder **400**. The substrate coupling part may have a groove shape concave upward than other areas.

The lens holder **400** may be omitted. In this case, the substrate module **500** may be coupled within a space within the first body **100**.

The camera module **10** may include a substrate module **500**. The substrate module **500** may be disposed within a space within the camera module **10**. The substrate module **500** may be disposed between the first body **100** and the second body **200**.

The substrate module **500** may include a first substrate **510**, a second substrate **520**, and a connection substrate (not shown).

The first substrate **510** may be a Printed Circuit Board (PCB). An image sensor may be disposed on an upper surface of the first substrate **510**. The image sensor may be disposed on the first substrate **510** to face the lens **330** within the lens module **300** in an optical axis direction. The first substrate **510** may be disposed within the substrate coupling part of the lens holder **400**.

The second substrate **520** may be a Printed Circuit Board (PCB). The second substrate **520** may be disposed to be spaced apart from the first substrate **510** in an optical axis direction. The second substrate **520** may be disposed below the first substrate 510. A connector (not shown) may be coupled to a lower surface of the second substrate **520**. An upper end of the connector may be soldered to the lower surface of the second substrate **520**.

A terminal **525** may be disposed on the lower surface of the second substrate **520**. The terminal **525** may be electrically and physically connected to a lower end of a heating member **700** to be described later.

The second substrate **520** may be electrically connected to the first substrate **510**. The second substrate **520** and the first substrate **510** may be electrically connected to each other through the connection substrate. The connection substrate may be a Flexible Printed Circuit Board (FPCB). Upper and lower ends of the connection substrate may be coupled to the first substrate **510** and the second substrate **520**, respectively, to electrically connect the first substrate **510** and the second substrate **520**.

The substrate module **500** may further include a shield can (not shown) disposed between the first substrate **510** and the second substrate **520**. The first substrate **510** and the second substrate **520** may be spaced apart from each other in an optical axis direction through the shield can.

Hereinafter, a heat generation structure of a lens according to a first embodiment of the present invention will be described.

The camera module **10** may include a heating member **700**. The heating member **700** may provide heat to a surface of the lens **330**. The heating member **700** may provide heat to a surface of an outermost lens among a plurality of lenses **330**. Accordingly, frost formed on the surface of the lens **330** may be removed.

The heating member **700** may be a positive temperature coefficient (PTC) heater. The heating member **700** may have one end connected to the surface of the lens **330** and the other end connected to the substrate module **500**.

In detail, the outermost lens **330** disposed on the barrel **310** may include an incident surface **331** through which light is incident, an exit surface **333** which faces the incident surface **331** and through which the incident light is emitted toward the image sensor, and a connection surface **335** connecting the incident surface **331** and the exit surface **333**. The connection surface **335** may form a lower surface of the lens **330**. The connection surface **335** may form a side surface of the lens **330**. One end of the heating member **700** may be coupled to the connection surface **335**.

The connection surface **335** may include a plurality of surfaces disposed to be stepped from each other in an optical axis direction. The plurality of surfaces may include a first surface and a second surface disposed within an inner side of the first surface. The plurality of surfaces may include a first side surface connecting the first surface and the second surface. The plurality of surfaces may include a second side surface disposed within an outer side of the first surface. The first surface may be disposed above the second surface. One end of the heating member **700** may be coupled to the first surface. One end of the heating member **700** may be coupled to the second side surface.

The heating member **700** may be in a film shape. The heating member **700** may be a substrate on which a circuit pattern is formed. The heating member **700** may be a Flexible Printed Circuit Board (FPCB).

The heating member **700** may include an upper end portion **710**, a lower end portion **720**, and a connection part **730**. The upper end portion **710** is disposed at an upper end of the heating member **700** and may be coupled to a surface of the lens **330**. As shown in FIG. 3, the upper end portion **710** has a ring-shaped cross-section and may be coupled to the connection surface **335**. The upper end portion **710** may generate heat by supplying power. The upper end portion **710** may have a circular shape corresponding to a shape of the lens **330** or the barrel **310**.

The lower end portion **720** is disposed at a lower end of the heating member **700** and may be coupled to the substrate module **500**. The lower end portion **720** may be coupled to a lower surface of the second substrate **520** of the substrate module **500**. The lower end portion **720** may be coupled to the terminal **525** disposed on the lower surface of the second substrate **520**. Accordingly, power may be provided from the substrate module **500** to the heating member **700**, or a driving signal may be transmitted and received.

The connection part **730** may connect the upper end portion **710** and the lower end portion **720**. The connection part **730** may include an area bent at least once or more. At least a portion of the connection part **730** may be disposed between an outer surface of the barrel **310** and an inner surface of the first body **100**. A hole (not shown) through which the connection part **730** penetrates may be formed within the barrel **310**.

As shown in FIG. 3, a width **W3-2** of an electrode of the connection part **730** may be greater than a width **W3-1** of an electrode of the upper end portion **710**. Accordingly, a loss of power provided from the substrate module **500** can be minimized.

The upper end portion **710** may include a plurality of electrodes spaced apart in a radial direction. Similarly, the connection part **730** may include a plurality of electrodes respectively connected to the plurality of electrodes. An interval **W2-1** between the plurality of electrodes in the upper end portion **710** may be greater than an interval **W2-2** between the plurality of electrodes in the connection part **730**. Accordingly, the power loss can be minimized by the electrode having a relatively large width in the connection part **730**, and heat efficiency of a heat generating area can be improved by maximizing the interval **W2-1** between the plurality of electrodes in the upper end portion **710**.

An area in which a width of an electrode decreases may be provided between the connection part **730** and the upper end portion **710**. Since a crack may occur due to a sudden change in an amount of current when the width **W3-2** of the electrode in the connection part **730** sharply decreases to the width **W3-1** of the electrode of the upper end portion **710**, in the present embodiment, as shown in FIG. 3, a crack can be prevented by forming an area in which the width gradually decreases between the connection part **730** and the upper end portion **710**.

As shown in FIG. 3, the upper end portion **710** is connected to the connection part **730**, and the other end of the upper end portion **710** may be spaced apart from the connection part **730** by a first separation distance **d1**. Accordingly, assembly reliability can be secured when the heating member **700** is attached to the lens **330**. The other end of the upper end portion **710** and an end of an electrode within the upper end portion **710** may be spaced apart by a second separation distance **d2.** Accordingly, the electrode within the upper end portion **710** can be prevented from being exposed to the outside, thereby improving heat transfer reliability of the heating member **700.**

Here, to secure the assembly reliability, the first separation distance **d1** may be smaller than the second separation distance **d2.** In addition, a radial width **W1** between an electrode disposed at a radially outer side among a plurality of electrodes within the upper end portion **710** and an outer peripheral surface of the upper end portion **710** may be smaller than the second separation distance **d2.** In addition, a radial interval **W2-1** between the plurality of electrodes within the upper end portion **710** may be greater than the first separation distance **d1.** As shown in FIG. 4, the heating member **700** may include a first substrate **712,** a second substrate **714,** a heat generating layer **716,** and an adhesive layer **719.**

Each of the first base material **712** and the second base material **714** is formed in a film shape, and a space in which the heat generating layer **716** is formed may be formed between them. The first base material **712** may be disposed relatively closer to the surface of the lens **330** than the second base material **714.** Accordingly, the first base material **712** and the second base material **714** may be respectively referred to as an upper base material and a lower base material.

The first base material **712** and the second base material **714** may be made of different materials. For example, a material of the first base material **712** may be polyimide. A material of the second base material **714** may be PET.

Based on an optical axis direction, a thickness **t2** of the first base material **712** may be smaller than a thickness **t1** of the second base material **714.** For example, the thickness **t2** of the first base material **712** may be 1/4 or less of the thickness **t1** of the second base material **714.** The thickness **t1** of the first base material **712** may be 20 µm to 30 µm. The thickness **t2** of the second base material **714** may be 80 µm to **120** µm. According to the structure as described above, by forming the thickness of the first base material **712**, which is disposed relatively closer to the surface of the lens **330**, to be thin, heat generated from the heat generating layer **716** can be efficiently transferred to the surface of the lens **330**. In addition, heat loss through the second base material **714** can be prevented.

Thermal conductivity of the first base material **712** may be greater than thermal conductivity of the second base material **714**. Accordingly, heat can be concentrated on the lens **330** through the first base material **712**.

The heat generating layer **716** may be disposed between the first base material **712** and the second base material **714**. The heat generating layer **716** may include a polymer, conductive particles **717** disposed within the polymer, and an electrode **718**. The polymer may be disposed to surround the conductive particles **717**.

The electrode **718** may be disposed on a surface of the polymer. The electrode **718** may include a plurality of electrodes having different polarities. The heat generating layer **716** may generate heat due to a resistance change of the conductive particles **717** caused by power supply from the substrate module **500**. One surface of the first base material **712** may be in direct contact with the plurality of electrodes **718**.

As shown in FIG. 4, a radial interval **W1** between any one of the plurality of electrodes **718** and an inner surface or an outer surface of the heat generating layer **716** may be smaller than an interval **W2** between the plurality of electrodes **718**. Accordingly, heat transfer can be more easily performed toward the lens **330** than toward a side surface of the heating member **700**.

In addition, a thickness **t5** of the electrode **718** in an optical axis direction may be greater than a diameter of the conductive particles **717**. Accordingly, heat transfer can be more easily performed toward an area between the plurality of electrodes **718**.

A thickness **t3** of the heat generating layer **716** may be greater than the thickness **t2** of the first base material **712**, and may be smaller than or equal to the thickness **t1** of the second base material **714**.

The adhesive layer **719** may be disposed on the first base material **712**. The adhesive layer **719** may be formed on the other surface of the first base material **712** facing the one surface of the first base material **712** in contact with the electrode **718.** An adhesive may be disposed on a surface of the adhesive layer **719.** The heating member **700** and the lens **330** may be coupled to each other through the adhesive layer **719.** A thickness **t4** of the adhesive layer **719** may be thicker than the thickness **t2** of the first base material **712.** The thickness **t4** of the adhesive layer **719** may be thinner than the thickness **t1** of the second base material **714.** The thickness of the adhesive layer **719** may be 40 µm to 60 µm. A material of the adhesive layer **719** may be an alumina-based or carbon-based non-electrically conductive material.

Thermal conductivity of the adhesive layer **719** may be greater than thermal conductivity of the second base material **714.** The thermal conductivity of the adhesive layer **719** may be greater than thermal conductivity of the first base material **712.** Accordingly, heat can be concentrated on the lens **330** through the adhesive layer **719.**

Meanwhile, a release film (not shown) may be disposed on the adhesive layer **719,** and strength of the heating member **700** can be reinforced through the release film.

According to the structure as described above, in accordance with a thermal resistance formula in which thermal resistance is inversely proportional to a length of a heat transfer path, the heating member **700** according to the present embodiment has an advantage in that not only can heat be easily transferred toward the lens **330** by adjusting thicknesses of the first base material **712** and the second base material **714,** but also heat generation efficiency of the lens **330** can be improved by preventing heat from being lost to other areas.

Hereinafter, a heat-insulating structure of the camera module **10** according to the first embodiment of the present invention will be described.

FIG. 5 is an enlarged view of A of FIG. 1.

Referring to FIGS. 1 and 5, the barrel **310** may include a heat-insulating area **313.** The heat-insulating area **313** may be a closed-space formed within the barrel **310.** The heat-insulating area **313** may be formed within the first body part **312** of the barrel **310.** The heat-insulating area **313** may be a vacuum area. Thermal conductivity of the heat-insulating area **313** may be smaller than thermal conductivity of a material forming the barrel **310**. For example, when the thermal conductivity of the material forming the barrel **310** is 100 W/mK to 200 W/mK, the heat-insulating area **313** may have a thermal conductivity of 0 due to the vacuum area. Accordingly, in accordance with Fourier's Law in which a heat transfer rate is proportional to thermal conductivity, heat transfer from an arrangement area of the lens **330** within the barrel **310** toward an outside of the barrel **310** can be efficiently reduced through the heat-insulating area **313**.

The heat-insulating area **313** may be disposed to overlap a rear lens **339** among the lenses **330** in a direction perpendicular to an optical axis direction. The heat-insulating area **313** may be disposed to be stepped from an outermost lens **338** in the optical axis direction. Accordingly, since the heat-insulating area **313** can be formed within the first body part **312** of the barrel **310** having a relatively large thickness, there is an advantage in that the heat-insulating area **313** can be formed wider.

Referring to FIG. 5, the first body part **312** may be divided into: an inner plate portion formed inside the heat-insulating area **313**; an outer plate portion formed outside the heat-insulating area **313**; and a front plate portion formed in front of the heat-insulating area **313** where the outermost lens **338** is disposed. In this case, the thickness **t2** of the outer plate portion may be greater than the thickness **t3** of the inner plate portion. Accordingly, thermal conductivity through the heat-insulating area **313** can be minimized while maintaining a constant strength within the barrel **310**.

The thickness **t6** of the second body part **316** may be greater than the thickness **t2** of the outer plate portion or the thickness **t3** of the inner plate portion. Accordingly, the strength of the second body part **316** supporting the outermost lens **338** can be maintained at a constant level.

The thickness **t4** of the front plate portion may be smaller than the thickness **t2** of the outer plate portion or the thickness **t3** of the inner plate portion. Accordingly, the path through which heat is transferred from the heating area of the heating member **700** can be minimized.

Based on a direction perpendicular to the optical axis direction, the sum of the thickness **t2** of the outer plate portion and the thickness **t3** of the inner plate portion may be equal to or smaller than the thickness **t5** of the heat-insulating area **313**. Accordingly, the insulation effect can be maximized while maintaining a constant mechanical strength of the barrel **310**.

Meanwhile, although the present embodiment describes the heat-insulating area **313** as a vacuum region by way of example, it is not limited thereto; a separate heat-insulating material may be additionally provided within the heat-insulating area **313**. In this case, the thermal conductivity of the heat-insulating material may be lower than the thermal conductivity of the material forming the barrel **310**.

Furthermore, while this embodiment describes an example in which the heat-insulating area **313** is formed in the first body part **312** within the barrel **310**, the heat-insulating area **313** may also be formed in the second body part **316**. In this case, the heat-insulating area **313** may be disposed to overlap the outermost lens **338** in a direction perpendicular to the optical axis direction. This is significant in that a direct insulation structure is implemented in the direction perpendicular to the optical axis direction.

An opening (not shown) that allows communication between the heat-insulating area **313** and an external area may be formed on the surface of the barrel **310** where the heat-insulating area **313** is located. In this case, a cover (not shown) may be detachably coupled to the opening. Accordingly, if the temperature within the camera module **10** rises excessively, the heat inside the camera module **10** can be discharged to the outside by opening the cover.

According to the above-described structure, by forming the heat-insulating area **313** within the barrel **310**, the heat transfer path within the barrel **310** is reduced and thermal resistance is increased. This provides the advantage of preventing heat intended for heating the lens **330** from being lost to the outside.

Hereinafter, the heat-insulating structure of the camera module **10** according to the second embodiment of the present invention will be described.

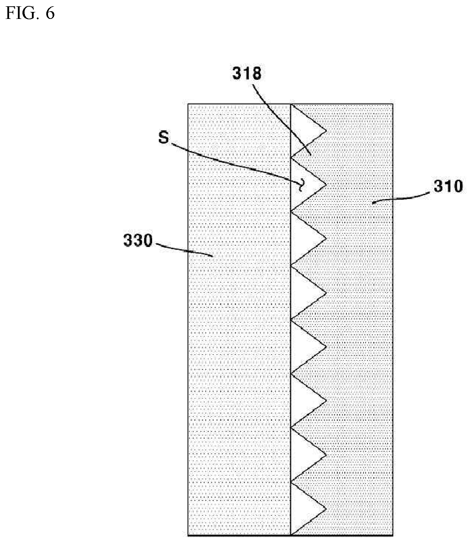

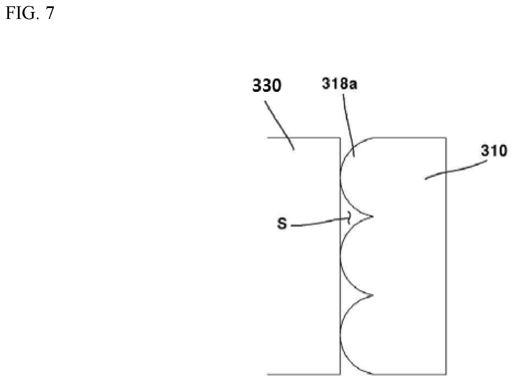

FIG. 6 is a cross-sectional view illustrating a coupling structure between a lens and a barrel according to the second embodiment of the present invention, and FIG. 7 is a view illustrating a modification of the coupling structure between the lens and the barrel according to the second embodiment of the present invention.

Referring to FIGS. 1 and 6, an air gap **S** may be formed between the lens **330** and the barrel **310**. The air gap **S** may be disposed between the outer surface of the lens **330** and the inner surface of the barrel **310**. Through the air gap **S**, the lens **330** and the barrel **310** may have a region where at least a portion thereof is spaced apart in a direction perpendicular to the optical axis direction. Between the outer surface of the lens **330** and the inner surface of the barrel **310**, a plurality of regions having different separation distances based on the direction perpendicular to the optical axis direction may be included. Here, the lens **330** between which the air gap **S** is formed may be the outermost lens **338**. The surface of the outermost lens **338** facing the air gap **S** in the direction perpendicular to the optical axis direction may be a connection surface **335** that connects the incident surface **331** and the exit surface **333** and forms a side surface.

In the case of the air layer within the air gap **S**, since it has a relatively lower thermal conductivity (0.026 W/m·K) compared to the lens **330** or the barrel **310**, heat transfer from the lens **330** toward the barrel **310** through the air gap **S** region can be minimized.

The surface roughness of the lens **330** and the surface roughness of the barrel **310** may be different from each other. The surface roughness of the lens **330** may be smaller than the surface roughness of the barrel **310**. Here, the surface roughness of the lens **330** may be the surface roughness of the side surface of the lens **330** facing the barrel **310**. The surface roughness of the barrel **310** may be the surface roughness of the inner surface of the barrel **310** facing the lens **330**.

When surface roughness is classified into a first level (rough surfaces), a second level (medium surface) smaller than the first level, and a third level (smooth surface) smaller than the second level, the thermal contact resistance increases as the surface roughness increases.

Accordingly, in the camera module **10** according to the embodiment of the present invention, the surface roughness of the barrel **310** is formed to be greater than the surface roughness of the lens **330**. As the thermal contact resistance of the barrel **310** increases, there is an advantage in that heat conduction in the direction from the lens **330** toward the barrel **310** can be minimized.

The surface roughness of the lens **330** may be 5 nm to 10 nm. The surface roughness of the barrel **310** may be 5 µm to 20 µm.

The surface roughness of the inner surface of the barrel **310** facing the lens **330** and the surface roughness of the outer surface of the barrel **310**, which is opposite to the inner surface and faces the first body **100**, may be different from each other. The surface roughness of the inner surface of the barrel **310** may be greater than the surface roughness of other portions of the barrel **310**. As described above, the surface roughness of the inner surface of the barrel **310** may be 5 µm to 20 µm. The surface roughness of the outer surface of the barrel **310** may be 0.3 µm to 2 µm. Accordingly, since only the surface roughness of the inner surface of the barrel **310** facing the heat source is formed to be larger than other regions, production efficiency can be improved.

At least a portion of the inner surface of the barrel **310** may contact the side surface of the lens **330**. In detail, a rib **318** having a shape protruding inward more than other regions may be formed on the inner surface of the barrel **310**. The rib **318** may be formed in a pointed shape. The rib **318** may have a triangular cross-sectional shape. A plurality of ribs **318** may be provided and disposed to be spaced apart from each other along the optical axis direction. The inner surface of the rib **318** may be in contact with the side surface of the lens **330**. The air gap **S** may be formed between two adjacent ribs **318**.

Meanwhile, as shown in FIG. 7, the rib **318a** may have a semi-circular cross-sectional shape, and in this case, the inner surface of the rib **318a** may be a curved surface.

In this embodiment, it has been described that the inner surface of the barrel **310** and the side surface of the lens **330** have a contact area through the ribs **318** and **318a**, but the present invention is not limited thereto. The inner surface of the ribs **318** and **318a** may also be spaced apart from the side surface of the lens **330**. In this case, a single air gap **S** communicating in the optical axis direction may be formed between the inner surface of the barrel **310** and the side surface of the lens **330**.

Furthermore, in this embodiment, the region where the air gap **S** is formed and the surface roughness is different has been described as an example of the side surface of the outermost lens **338** among the lenses **330** and the inner surface of the second body part **316** of the barrel **310**. However, the air gap **S** may also be formed between the side surface of the rear lens **339** and the inner surface of the first body part **312**. In this case, the side surface of the rear lens **339** and the inner surface of the first body part **312** may have the aforementioned surface roughness, and a surface structure through the rib **318** may also be formed on the inner surface of the first body part **312**.

According to the structure described above, an air gap having a relatively low thermal conductivity is formed between the lens and the barrel, providing an advantage in that heat loss from the heating area to the outside can be minimized.

In particular, there is an advantage in that the thermal contact resistance through the barrel can be increased due to the difference in surface roughness between the side surface of the lens and the inner surface of the barrel.

Meanwhile, the heat-insulating structure according to the first embodiment and the heat-insulating structure according to the second embodiment may be applied together. In this case, a heat-insulating area **313** may be disposed within the barrel **310**, and an air gap **S** may be disposed between the lens **330** and the barrel **310**.

In the above description, it is described that all the components constituting the embodiments of the present invention are combined or operated in one, but the present invention is not necessarily limited to these embodiments. In other words, inside the scope of the present invention, all of the components may be selectively operated in combination with one or more. In addition, the terms "comprise", "include" or "having" described above mean that the corresponding component may be inherent unless specifically stated otherwise, and thus it should be construed that it does not exclude other components, but further include other components instead. All terms, including technical and scientific terms, have the same meaning as commonly understood by one of ordinary skill in the art unless otherwise defined. Terms used generally, such as terms defined in a dictionary, should be interpreted to coincide with the contextual meaning of the related art, and shall not be interpreted in an ideal or excessively formal sense unless explicitly defined in the present invention.

The above description is merely illustrative of the technical idea of the present invention, and those skilled in the art to which the present invention pertains may make various modifications and changes without departing from the essential characteristics of the present invention. Therefore, the embodiments disclosed in the present invention are not intended to limit the technical idea of the present invention but to describe the present invention, and the scope of the technical idea of the present invention is not limited by these embodiments. The protection scope of the present invention should be interpreted by the following claims, and all technical ideas inside the equivalent scope should be interpreted as being included in the scope of the present invention.

## Claims

1. A camera module comprising:
a first body;
a lens module disposed within the first body and including a barrel and a lens disposed within the barrel;
a substrate module disposed within the first body; and
a heating member having one end connected to a surface of the lens and the other end connected to the substrate module to provide heat to the lens,
wherein the barrel has therein a heat-insulating area defined as a closed space.

2. The camera module according to claim 1,
wherein the heat-insulating area is a vacuum.

3. The camera module according to claim 1,
wherein a heat-insulating material is disposed in the heat-insulating area, and
wherein a thermal conductivity of the heat-insulating material is lower than a thermal conductivity of a material forming the barrel.

4. The camera module according to claim 1,
wherein the lens includes an outermost lens coupled to one end of the heating member and a rear lens disposed behind the outermost lens,
wherein the barrel includes a first body part in which the rear lens is disposed and a second body part in which the outermost lens is disposed, and
wherein a thickness of the first body part is greater than a thickness of the second body part.

5. The camera module according to claim 4,
wherein the heat-insulating area is formed within the first body part.

6. The camera module according to claim 4,
wherein the heat-insulating area is formed within the second body part.

7. The camera module according to claim 4,
wherein the heating member includes an upper end portion coupled to the lens, a lower end portion coupled to the substrate module, and a connection part connecting the upper end portion and the lower end portion, and
wherein a through-hole or a through-groove through which the connection part extends is formed in the second body part.

8. The camera module according to claim 4,
wherein the barrel includes an inner plate portion disposed on an inner side of the heat-insulating area adjacent to the rear lens, and an outer plate portion disposed on an outer side of the heat-insulating area adjacent to the first body, and
wherein a thickness of the outer plate portion is greater than a thickness of the inner plate portion.

9. The camera module according to claim 8,
wherein a thickness of the second body part is greater than each of a thickness of the inner plate portion and a thickness of the outer plate portion. .

10. The camera module according to claim 8,
wherein a sum of a thickness of the outer plate portion and a thickness of the inner plate portion is equal to or less than a thickness of the heat-insulating area.
